# EUROPÄISCHE PATENTSCHRIFT

(11) **EP 3 036 592 B1**
(45) Veröffentlichungstag und Bekanntmachung des Hinweises auf die Patenterteilung: **29.04.2020**
(21) Anmeldenummer: 14752836.8
(22) Anmeldetag: 14.08.2014
(51) Int. Cl.: G05B 23/02

(54) **VERFAHREN UND VORRICHTUNG ZUR VERBESSERUNG EINES BETRIEBS EINER TECHNISCHEN ANLAGE**
METHOD AND DEVICE FOR IMPROVING THE OPERATION OF A TECHNICAL SYSTEM
PROCÉDÉ ET DISPOSITIF D'AMÉLIORATION DU FONCTIONNEMENT D'UNE INSTALLATION TECHNIQUE

(30) Priorität: 23.08.2013 DE 102013216874
(43) Veröffentlichungstag der Anmeldung: 29.06.2016
(73) Patentinhaber: Siemens Aktiengesellschaft, 80333 München (DE)
(72) Erfinder: JAHN, Roland, 76199 Karlsruhe (DE); MORGENROTH, Marc, 98646 Hildburghausen (DE)
(86) Internationale Anmeldenummer: PCT/EP2014/067392
(87) Internationale Veröffentlichungsnummer: WO 2015/024849

(56) Entgegenhaltungen:
- WO-A1-2004/027531
- DE-A1- 19 650 327
- WOLFGANG ALBERT: "3.6 Meldearchiv-Analyse", 1. Januar 2009 (2009-01-01), HANDBUCH DER PROZESSAUTOMATISIERUNG (4. AUFL.), OLDENBOURG INDUSTRIEVERLAG, MUENCHEN, DE, PAGE(S) 158 - 163, XP009180733, ISBN: 978-3-8356-3142-7 das ganze Dokument

## Beschreibung

Die Erfindung betrifft ein Verfahren zur Verbesserung eines Betriebs einer technischen Anlage wobei der innerhalb der Anlage ablaufende technische Prozess mittels eines Prozessleitsystems gemäß der im Rahmen einer Projektierung in einem Funktionsplan festgelegten Funktionen gesteuert und/oder überwacht wird, und wobei prozesstechnische und leittechnische Daten aufgenommen und in ein Archiv geschrieben werden. Angegeben ist auch eine entsprechende Vorrichtung zur Durchführung des erfindungsgemäßen Verfahrens, ein Leitsystem und Computerprogrammprodukt.

Moderne Prozessleitsysteme, wie sie in hochautomatisierten Kraftwerken üblicherweise verwendet werden, bilden die Schnittstelle zwischen einem in einer technischen Anlage ablaufenden technischen Prozess und dem Bedienpersonal, welches den technischen Prozess steuern und/oder überwachen soll. Mittels der Bedien- und Beobachtungseinheit des Leitsystems kann ein Operateur auf alle relevanten Prozessdaten zugreifen und bei Bedarf in Form von Bedienhandlungen auf den Prozess einwirken. Das Leitsystem stellt dem Bedienpersonal ferner eine Vielzahl von Meldungen über nicht normale Zustände des Prozesses oder der Leittechnik zur Verfügung, sodass schnell und gezielt auf Störungen und Prozessabweichungen reagiert werden kann. Trotz der weitestgehend autark arbeitenden Leitsysteme muss der Operateur häufig unter Zeitdruck die auftretenden Meldungen analysieren und richtigen Entscheidungen treffen, wobei eine hohe Informationsflut den Entscheidungsprozess erschweren oder zum Versagen bringen kann.

Im Dokument Wolfgang Albert: "3.6 Meldearchiv-Analyse", 1. Januar 2009 (2009-01-01), Handbuch der Prozessautomatisierung (4. Aufl.), Oldenburg Industrieverlag, Muenchen, DE Pages 158-163, XP009180733, ISBN: 978-3-8356-3142-7 wird die Analyse des Meldearchivs beschrieben.

Dabei erweist sich im späteren Betrieb der Anlage oftmals, dass so viele Meldungen beim Bedienpersonal auflaufen, dass nicht auf jede Meldung adäquat reagiert werden kann.

Eine Reduzierung der Meldungsflut verhindert kostspielige Bedienfehler und gewährleistet eine höhere Zuverlässigkeit und Wirtschaftlichkeit des Betriebs der technischen Anlage. Dennoch wird das Erreichen von Empfehlungen an maximal auftretenden Meldungen (z.B. EEMUA 191, max. ein kritischer Alarm je 10 Minuten) oftmals aus Kostengründen nicht angegangen.

Es besteht somit ein Bedarf an kostengünstigen, wirkungsvollen Methoden, um die Informationsflut zu reduzieren.

Ein Ansatz, besteht darin, die Einträge von entsprechenden Meldungsarchiven, also Archiven, in welchen vergangene Meldungen abgelegt sind, zu analysieren, um auf Basis des Analyseergebnisses die Prozessführung zu verbessern.

Bisher wurden im Wesentlichen die Ursachen von erheblichen Störungen oder Betriebseinschränkungen mit Hilfe manueller Auswertung der Archivdaten der Anlage gelöst. Dies erfordert jeweils einen erheblichen Klärungsaufwand, ist jedoch, da es sich um Einzelfälle handelt, wirtschaftlich vertretbar.

Die üblicherweise verwendeten Meldearchivanalysen sind statistischer Natur. Wenn die Zahl der Meldungen dem Betreiber der Anlage zu hoch erscheint, dann werden mit Hilfe von statistischen Auswertungen zunächst die häufigsten Meldungen ermittelt. Diese Untersuchungen erfolgen bisher immer bezogen auf den Einzelfall und werden aufgrund des Aufwands nicht für die Gesamtheit der Meldungen durchgeführt. Statistische Auswertemethoden sind beispielsweise aus dem Handbuch der Prozessautomatisierung, K. F. Früh, U. Maier, D. Schaudel, 4. Auflage, Seiten 158 bis 163, Oldenbourg Industrieverlag, bekannt.

Aufgabe der vorliegenden Erfindung ist es, ein Verfahren und eine entsprechende Vorrichtung zur Verbesserung des Betriebs einer technischen Anlage anzugeben, welches eine systematische Auswertung nicht nur des Meldungsarchivs, sondern des gesamten Archivs eines Leitsystems umfasst und somit über eine rein statistische Analyse von Meldungsarchiven hinaus geht.

Diese Aufgabe wird durch die Merkmale des unabhängigen Patentanspruchs gelöst. Vorteilhafte Ausgestaltungen sind jeweils in den abhängigen Patentansprüchen wiedergegeben.

Bezüglich des Verfahrens wird die Aufgabe gelöst, indem die Archiveinträge, welche im Zusammenhang mit Meldungen, Bedien- oder Schalthandlungen stehen, innerhalb eines zu definierenden Zeitbereichs ausgiebig analysiert werden. Nachdem eine statistische Relevanz der betrachteten Archiveinträge ermittelt wird, wird eine Ursachenermittlung unter Verwendung aller, während des betrachteten Zeitbereichs aufgetretenen Archiveinträge für die statistisch relevantesten Archiveinträge anhand einer Auswertung der Funktionspläne und/oder anhand einer Auswertung zeitlicher Aspekte durchgeführt. Aus den derart ermittelten Ursachen werden Lösungsvorschläge zur Reduktion der Meldungen, Bedien- oder Schalthandlungen abgeleitet, um den Betrieb der technischen Anlage zu verbessern.

Die Erfindung geht von der Überlegung aus, dass Archiveinträge umfangreiche Informationen über Meldungen, Bedien- und Schalthandlungen wiedergeben. Eine weitreichende Analyse der Archiveinträge gemäß der Erfindung kann daher nicht nur dahingehend genutzt werden, eine systematische und kostengünstige Reduktion der Meldungsflut im Leitsystem einer technischen Anlage zu erreichen, sondern ebenfalls eine Reduktion von überflüssigen Bedien- und Schalthandlungen zu erwirken, was sich letztendlich in einer Verbesserung des Betriebs der technischen Anlage niederschlägt. Der Prozess kann ruhiger ablaufen, das Bedienpersonal ist entlastet. Ferner ermöglicht das erfindungsgemäße Verfahren, dass mit minimalem Aufwand eine erhebliche Zahl von Meldungen nach ihrer Ursache aufgeklärt wird und bei Realisierung der vorgeschlagenen Lösungsmöglichkeiten ein zukünftiges Auftreten dieser Meldungen minimiert wird. Ferner kann man auf diese Weise ein qualitativ hochwertiges optimiertes Alarmsystem realisiert werden, welches effektiv nur die Alarme meldet, welche wirklich eine Bedienhandlung erfordern.

In vorteilhafter Ausgestaltung des Verfahrens umfasst die statistische Auswertung Häufigkeitsanalysen und Häufigkeitstrendanalysen. Diese dienen der raschen Ermittlung (zum Beispiel anhand einer geeigneten Darstellung in beliebiger Diagrammform) der statistisch relevantesten Archiveinträge, welche untersucht werden sollen.

In weiterer vorteilhafter Ausgestaltung des Verfahrens wird untersucht, ob innerhalb des zuvor definierten Zeitbereichs der zu analysierende Archiveintrag mit einem einzelnen Funktionsbaustein zusammenhängt. Dieser Funktionsbaustein wird anschließend auf eine Fehlprojektierung hin überprüft und diese behoben. Diese Ausführungsvariante eignet sich insbesondere für analoge Archiveinträge, bei denen beispielsweise ein Grenzwert ungünstig projektiert ist.

In weiterer vorteilhafter Ausgestaltung des Verfahrens wird untersucht, ob innerhalb des zuvor definierten Zeitbereichs der zu analysierende Archiveintrag mit mehreren Funktionsbausteinen zusammenhängt. In diesem Fall wird die Logik dieser Funktionsbausteine untereinander überprüft wird und durch anschließende Projektierung verbessert. Diese Ausführungsvariante eignet sich insbesondere für Meldungen, Bedien- und Schalthandlungen, welche auf zeitlich unmittelbar zuvor liegende Ereignisse oder Zustände zurückzuführen sind, welche sich durch vorgeschaltete Funktionsbausteine wiederspiegeln. Durch Umprojektierung oder Modifizierung der betrachteten Menge der Funktionsbausteine können Fehlermeldungen, unnötige Bedien- und Schalthandlungen unterbunden oder reduziert werden.

In einer weiteren vorteilhaften Ausgestaltung des Verfahrens wird untersucht, ob innerhalb des zuvor definierten Zeitbereichs der zu analysierende Archiveintrag keine Zusammenhänge zu den Funktionsbausteinen der Projektierung aufweist. Hier können nur prozesstechnische Details und Expertenwissen zur Ursachenermittlung und Lösungsermittlung herangezogen werden.

Eine Vorrichtung zur Durchführung des erfindungsgemäßen Verfahrens kann entweder vorteilhaft separat zu einem Leitsystem mit Zugriff auf einzelne Komponenten des Leitsystems oder als Bestandteil eines Leitsystems ausgeführt sein. Die separate Lösung kann als Zusatzkomponente und Begleitlösung mit eigener Benutzerschnittstelle angeboten werden. Für bestimmte Anwendungsfälle kann die ins Leitsystem integrierte Lösung ebenfalls vorteilhaft sein.

Die Erfindung wird nachfolgend anhand von Ausführungsbeispielen näher erläutert. Dabei zeigt die einzige
- Figur: ein Blockschaltbild einer möglichen Realisierung einer Vorrichtung zur Durchführung des erfindungsgemäßen Verfahrens.

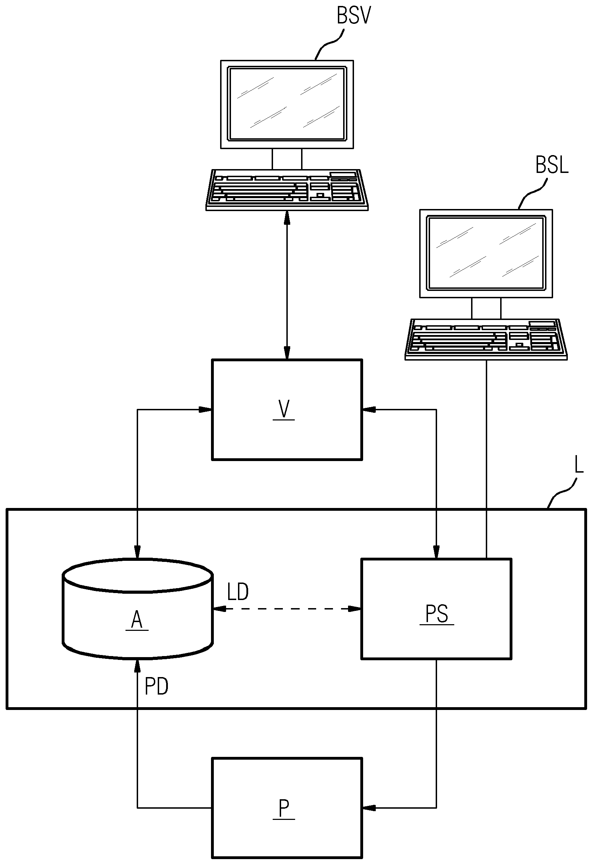

In der Figur ist in vereinfachter Form ein Blockschaltbild einer möglichen Realisierung einer Vorrichtung zur Durchführung des erfindungsgemäßen Verfahrens dargestellt. Die Vorrichtung V kann als Teil eines Prozessleitsystems L oder als Zusatzsystem ausgeführt sein. Das Prozessleitsystem L steuert, regelt und/oder überwacht einen technischen Prozess P, welcher in einer technischen Anlage abläuft. Das Leitsystem L umfasst eine Vielzahl von Recheneinheiten wie Server, Datenbusse und Schnittstellen zum Benutzer oder anderen Systemen, insbesondere Schnittstellen zu den Feldgeräten, welche im Prozess der technischen Anlage verankert sind. Hier sind nur die für die Erfindung wesentlichen Einheiten, nämlich das Archiv A und das Projektierungssystem PS dargestellt. Das Projektierungssystem ist hier mit einem Bildschirm BSL verbunden, von wo aus die Projektierung der technischen Anlage erfolgt und von wo aus ein Nutzer über das Leitsystem L auf den Prozess P einwirken kann.

In diesem Ausführungsbeispiel ist die Vorrichtung V, auf welcher das erfindungsgemäße Verfahren abläuft, separat zum Prozessleitsystem L beispielsweise auf einem gesonderten Computer ausgeführt. Die Vorrichtung V ist zum Einen mit dem Archiv A des Prozessleitsystems L und zum Anderen mit dem Projektierungssystem PS des Leitsystems L verbunden. Die Vorrichtung V ist ferner mit einer Anzeigevorrichtung BSV verbunden. Die Anzeigevorrichtung BSV steht sinnbildlich für eine Präsentationsschicht oder Benutzeroberfläche, über welche ein Anwender auf die Funktionen der erfindungsgemäßen Vorrichtung V zugreifen kann.

In dem Archiv A werden sowohl prozesstechnische Daten PD, wie zum Beispiel Drücke, Temperaturen oder Füllstandsanzeigen von Feldgeräten abgelegt, als auch leittechnische Daten LD wie Sollwerte, Informationen über Signale oder Zeitstempel. Aufgrund der zum Teil unterschiedlichen Informationsgehalte der zu archivierenden Signale erfolgt die Archivierung in Kategorien. Unterteilt werden die Archivdaten in analoge Signale, binäre Signale und Bediensignale. Der Hauptanteil der zu archivierenden Daten entsteht in der Kategorie der analogen Signale. In der Kategorie der binären Archivdaten werden immer dann Einträge erzeugt, wenn eine Signalzustandsänderung stattfindet, d. h. ein Binärsignal vom Zustand 0 auf 1 oder 1 auf 0 wechselt. Dabei sind die Binärsignale zu unterteilen in binäre Prozesszustände mit und ohne Meldungen. Während binäre Prozesszustände meist nur in das Archiv geschrieben werden, haben Meldungen eine besondere Bedeutung für das Bedienpersonal. Meldungen sollen das Bedienpersonal aktiv auf bestimmte Zustände im Kraftwerk hinweisen und werden über eine Meldefolgeanzeige auf dem Bediensystem dargestellt. Abhängig von der Bedeutung der Meldungen für die Sicherheit des Kraftwerkprozesses erfolgt eine Zuordnung der Meldungen in unterschiedliche Meldeklassen, wie Alarme, Warnungen oder Toleranzen. Diese Unterteilung hängt mit der Priorisierung der Meldungen zusammen. Die höchstpriore Meldeklasse ist die Klasse der Alarme. In diese Meldeklasse werden alle Meldungen eingeteilt, die eine unverzügliche Handlung des Bedienpersonals erfordern. Unnötige Meldungen sind demnach Meldungen unterster Priorität, die keine Reaktion des Anlagenfahrers erfordern, daher für ihn keinen Wert haben und lediglich unnötig belasten.

Erfolgen vom Bedienpersonal manuelle Eingriffe in den Anlagenprozess, um z. B. auf Meldungen zu reagieren, so werden diese in der Gruppe der Bediensignale archiviert. Der Archiveintrag der "Bedienhandlung" soll manuelle Eingriffe des Operators in den Prozess dokumentieren. Bedienhandlungen sind beispielsweise das Öffnen eines Ventils, das Starten eines Motors oder das Ausschalten einer Pumpe. Ferner existieren als Archiveinträge noch "Schalthandlungen", welche einen Untereintrag der binären Signale darstellt. Der Archiveintrag der "Schalthandlung" kennzeichnet das Ergebnis manueller oder automatischer Eingriffe des Leitsystems in den Prozess. Schalthandlungen sind beispielsweise An- und Ausschalten eines Leistungsschalters oder ein Stellungswechsel eines Aktors.

Der Archivierungsvorgang kann zyklisch, ereignis- oder zustandsgesteuert erfolgen.

Welche Daten wann und wie in das Archiv geschrieben werden wird bei der Projektierung der technischen Anlage festgelegt. Die Befüllung des Archivs ist somit Teil der Projektierungsarbeit (Engineering). Hier werden Prozessanforderungen oder leittechnische Anforderungen in den Schaltplänen festgehalten. Üblicherweise werden technische Anlagen mittels graphischer Projektierungstools (hier Projektierungssystem PS) gemäß einer der in der EN 61131-3 (IEC 61131-3) definierten Sprachen zur Programmierung von Speicherprogrammierbaren Steuerungen (SPS) projektiert. Die derart erhaltenen Funktionspläne enthalten alle Informationen, welche zur Realsierung einer Automatisierungsfunktion notwendig sind. Ein Funktionsplan oder Funktionsbausteinprogramm enthält Funktionsbausteine, welche über Linien (logische Verbindungen) miteinander verbunden sind. Dabei sind die meisten Funktionsbausteine Repräsentanten für einfache logische Funktionen. Der Signalfluss eines Funktionsbausteinprogramms und durch einen Funktionsbaustein verläuft von links nach rechts. Links können binäre oder analoge Eingangssignale (Konstanten und/oder Variablen) übergeben werden, rechts werden entsprechend verarbeitete Signale ausgegeben. Bestimmte Funktionsbausteine sind manuell bedienbar.

Das erfindungsgemäße Verfahren läuft im Wesentlichen in den folgenden Schritten ab:
In einem ersten Schritt wird festgelegt, welche Archiveinträge (Signalkategorie, Meldung, Bedien- oder Schalthandlung) analysiert werden sollen und über welchen Zeitraum sie analysiert werden sollen.

In einem nächsten Schritt wird für diese Archiveinträge eine statistische Archivdatenanalyse durchgeführt. Hierbei sind Häufigkeitsanalysen und Häufigkeitstrendanalysen als Ausführungsbeispiele zu nennen:
Häufigkeitsanalysen geben bezogen auf die jeweilige Signalkategorie (Analog, Binär, ...) Auskunft über die Anzahl der im Archiv hinterlegten Signaleinträge pro Signal. Werden die Kennzeichen einer Signalart zum Beispiel in einem Kuchen- oder Balkendiagramm gegen ihre Anzahl aufgetragen, können die Signale, welche am häufigsten auftreten, einfach abgelesen werden. Außerdem enthalten die Häufigkeitsanalysen zusätzliche Informationen, mit deren Hilfe eine gezielte Reduktion des Archivdatenumfangs durchgeführt werden kann. So enthalten die Häufigkeitsanalysen von Analogsignalen nicht nur den Signalwert sondern auch Informationen über den Messbereich, die Signalqualität oder sonstige Signal- und Zeitinformationen.

Die Häufigkeitstrendanalysen geben bezogen auf die jeweilige Signalkategorie einen Überblick über die Häufigkeit der Archiveinträge im zeitlichen Verlauf (in Anlehnung an die Trenddarstellungen des Leitsystems). Dabei gibt es die Option, die Häufigkeitstrendanalyse in Verbindung mit dem Verlauf der Kraftwerksleistung darzustellen. Damit können Erkenntnisse über das Anlagenverhalten in bestimmten Fahrweisen ermittelt werden, sodass darauf aufbauend eine detaillierte Untersuchung eingeleitet werden kann.

In einem nächsten Schritt findet eine Ursachenermittlung für die in Schritt 1 ermittelten statistisch relevantesten Archiveinträge unter Verwendung aller anderen, während dieses Zeitraums aufgetretenen Archiveinträge anhand einer Auswertung der Informationen aus den Funktionsplänen und/oder einer Auswertung von Informationen aus dem Prozess statt.

Dies bedeutet, dass für einen zuvor ausgewählten Archiveintrag einer bestimmten Signalkategorie, zunächst überprüft wird, ob innerhalb eines definierten Zeitraums der Archiveintrag mit einem Funktionsbaustein oder mit mehreren verschalteten Funktionsbausteinen in Zusammenhang steht oder ob kein Zusammenhang zwischen dem Archiveintrag und irgendwelchen Funktionsbausteinen besteht. Ist kein direkter Zusammenhang in der Logik der Verschaltungen erkennbar, so kann es einen prozesstechnischen Zusammenhang geben, wenn innerhalb eines bestimmten Zeitbereichs sich wiederholende Ereigniskombinationen auftreten.

Häufig geht bereits mit der Ursachenermittlung die Ermittlung von Lösungsvorschlägen zur Reduktion der Archiveinträge der einzelnen Signalkategorien und damit zur Anlagenoptimierung einher. Zusätzlich können im Rahmen der Ursachenermittlung auch doppelt und mehrfach aufgetretene Archiveinträge überprüft werden. Hierbei ist allerdings auch zu überprüfen, ob die zu untersuchenden Archiveinträge zum gleichen Funktionsbaustein oder zur gleichen Funktionsgruppe gehören.

Im Folgenden sollen zur Verdeutlichung drei Ausführungsbeispiele gegeben werden:
1. Steht der Archiveintrag im Zusammenhang mit einem einzelnen Funktionsbaustein, so kann dieser zunächst auf eine falsche Projektierung hin überprüft werden. Ein Beispiel hierfür wäre ein Alarm, welcher von einem Grenzwert eines Analogsignals ausgelöst wurde. Folgende Ursachen können in diesem Fall für das gehäufte Auftreten des Alarms in Frage kommen:
   a) Der Grenzwert ist ungünstig gewählt, weil er im Allgemeinen nur minimal über- bzw. unterschritten wird.
   b) Der Grenzwert wird immer wieder nur für eine sehr kurze Zeitdauer über- bzw. unterschritten.
   c) Das Totband (Jeder Grenzwert kann mit einem Totband gekoppelt werden, welches den Rückschaltpunkt des Grenzwerts um die Größe des Totbands gegenüber dem Grenzwert so verschiebt) ist im Vergleich zur Qualität der Messung ungünstig gewählt, so dass aufgrund des Schwankens des Analogwerts ein Flattern des Grenzwerts erfolgt.

   Die Ursachenermittlung besteht hier demnach in einer Auswertung einer Kombination aus dem Alarm (im Zshg. mit dem Grenzwert), weiteren Archiveinträgen (Einträge im Zshg. mit dem Verlauf des Analogsignals, wie häufig/wie lange/um welchen Betrag wurde der Grenzwert über- oder unterschritten) und den projektierten Werten (Grenzwert, Totbandbreite) desselben Funktionsbausteins.
   Um festzustellen, mit welcher Maßnahme der beste Erfolg erreicht werden kann, werden folgende Lösungsvorschläge denkbar und von der erfindungsgemäßen Vorrichtung dem Anwender präsentiert:
   zu a) Es wird der maximale bzw. minimale Wert des Analogwerts während der Dauer des Anstehens des Alarms ermittelt. Um das Problem der minimalen bzw. maxi malen Über- bzw. Unterschreitung des Grenzwertes zu lösen, wird der Grenzwert hinauf- oder herabgesetzt. Auf diese Weise können weitere unnötige Alarme unterbunden werden.
   Zu b) Es wird die Dauer des Anstehens des Alarms unter sucht (z.B. 0...1 Sek, 1...3 Sek, 3...5 Sek, 5...10 Sek). Liegt ein hoher Anteil der Meldungen im Bereich 0...1 Sek so ist eine Meldeunterdrückung für z.B. 2 Sekunden sinnvoll.
   Zu c) Ist der Abstand der aufeinanderfolgenden Meldungen sehr kurz, so kann die Lösung für eine Meldungsreduktion darin bestehen, das Totband zu vergrößern.
2. Zur Ursachenermittlung kann ferner eine Auswertung von Archiveinträgen von verschiedenen Bausteinen durchgeführt werden, wobei die logische Verbindung zwischen den Bausteinen mit berücksichtigt und untersucht wird. Tritt beispielsweise eine Fehlermeldung auf, so werden die zeitlich unmittelbar vor der Fehlermeldung liegenden Ereignisse oder Zustände untersucht. Bei einem Funktionsbaustein können dann die vorgeschalteten Bausteine betrachtet werden. Bei einer analogen "2 aus 3 Auswahl" werden Meldungen erzeugt, wenn die Abweichung zwischen den Einzelmessungen einen zu projektierenden Wert überschreitet. Um zu einer Reduktion der Meldungen zu kommen, ist es sinnvoll zu ermitteln, ob es ständige Abweichungen der Messungen zueinander gibt. Sollte eine der drei Messungen dauerhaft abweichen, ist der betroffene Messumformer zu kalibrieren. Zusätzlich ist es hilfreich zu ermitteln, wie groß die maximale Abweichung während einer Meldephase war. Damit kann entschieden werden, ob ggfs. die Grenze der zulässigen Abweichung angepasst werden kann.
   Solche konkreten Untersuchungen sind auch möglich, um gleichartige Bedienhandlungen unter vergleichbaren Prozesszuständen oder um häufige Schalthandlungen zu ermitteln. Die Ursachenermittlung besteht hier demnach in einer Auswertung einer Kombination aus Archiveinträgen von verschiedenen Bausteinen und deren logischen Verbindungen (den projektierten Werten der Funktionsbausteine).
3. Wenn es keine logischen Verbindungen in den Funktionsplänen zwischen zwei Ereignissen gibt, welche jeweils zu einem Archiveintrag führen, so wird eine Ursachenermittlung mittels einer zeitlichen Auswertung oder Analyse des automatisierten Prozesses in einer Zeitspanne vor Auftreten von sich wiederholenden Ereignissen durchgeführt. Ein Beispiel hierfür ist die analoge Messung einer Staubkonzentration im Abgas eines Kraftwerks. Die Messung selbst wird regelmäßig (z. B. alle 2 Stunden) automatisch kalibriert. Die Analyse über die zeitliche Korrelation hat ergeben, dass jeweils ca. 5 Sekunden nach Ablauf der Kalibrierung eine Meldung "Staubkonzentration gestört" kommt und dabei kurzzeitig das Messsignal der Staubkonzentration einen undefinierten Wert annimmt. Dieser undefinierte Wert wird vom Leittechniksystem erkannt und gemeldet, obwohl keine nennenswerte Störung vorliegt. Um zukünftig im Zeitraum der Kalibrierung dieses Signals keine Meldungen zu erzeugen, ist es erforderlich, den letzten gültigen Signalwert zu speichern und im Zeitraum der aktiven Kalibrierung eine Meldung am zugehörigen Funktionsbaustein z.B. in diesem Fall für 20 Sekunden zu unterdrücken.

In den oben beschriebenen Ausführungsbeispielen wurde das erfindungsgemäße Verfahren auf Archiveinträge, welche im Zshg. mit Meldungen stehen, angewandt. Für Bedienhandlungen und Schalthandlungen ist die Vorgehensweise analog zu der der Meldungen. Für die zuvor ermittelten statistisch relevantesten Archiveinträge der Bedien- oder Schalthandlungen werden unter Verwendung aller in dieser Zeitspanne aufgetretenen Archiveinträge und anhand einer Auswertung der Informationen aus den Funktionsplänen und/oder einer Auswertung von Informationen aus dem Prozess Ursachen und Lösungsvorschläge zur Reduktion der zuvor ausgewählten und untersuchten Archiveinträge ermittelt mit dem Ziel, auf bestimmte Prozesszustände automatisch zu reagieren.

## Patentansprüche

1. Verfahren zur Verbesserung eines Betriebs einer technischen Anlage,
wobei der innerhalb der Anlage ablaufende technische Prozess (P) mittels eines Prozessleitsystems (L) gemäß der im Rahmen einer Projektierung in einem Funktionsplan festgelegten Funktionen gesteuert und/oder überwacht wird, und
wobei prozesstechnische und leittechnische Daten aufgenommen und in ein Archiv (A) geschrieben werden,
**dadurch gekennzeichnet, dass**
die Archiveinträge, welche im Zusammenhang mit Meldungen, Bedien- oder Schalthandlungen stehen, innerhalb eines zu definierenden Zeitbereichs analysiert werden, indem zunächst eine statistische Relevanz der betrachteten Archiveinträge ermittelt wird,
eine Ursachenermittlung unter Verwendung aller, während des betrachteten Zeitbereichs aufgetretenen Archiveinträge für die statistisch relevantesten Archiveinträge durch Auswertung der Funktionspläne durchgeführt wird, und aus den derart ermittelten Ursachen Lösungsvorschläge zur Reduktion der Meldungen, Bedien- und Schalthandlungen abgeleitet werden, um den Betrieb der technischen Anlage zu verbessern.

2. Verfahren nach Anspruch 1,
**dadurch gekennzeichnet,**
**dass** die statistische Auswertungen Häufigkeitsanalysen und Häufigkeitstrendanalysen umfassen.

3. Verfahren nach Anspruch 1 und 2,
**dadurch gekennzeichnet,**
**dass** untersucht wird, ob innerhalb des definierten Zeitbereichs der zu analysierende Archiveintrag mit einem Funktionsbaustein zusammenhängt und dieser Funktionsbaustein anschließend auf eine Fehlprojektierung hin überprüft wird, indem eine Auswertung einer Kombination aus dem zu analysierenden Archiveintrag, weiteren Archiveinträgen und den projektierten Werten des Funktionsbausteins durchgeführt wird und ein Lösungsvorschlag zur Behebung der Fehlprojektierung einem Anwender auf einer Anzeigevorrichtung (BSL, BSV) präsentiert wird.

4. Verfahren nach Anspruch 1 und 2,
**dadurch gekennzeichnet,**
**dass** untersucht wird, ob innerhalb des definierten Zeitbereichs der zu analysierende Archiveintrag mit mehreren Funktionsbausteinen zusammenhängt, und die Logik dieser Funktionsbausteine untereinander überprüft wird und durch anschließende Projektierung verbessert wird.

5. Verfahren nach Anspruch 1 und 2,
**dadurch gekennzeichnet,**
**dass** untersucht wird, ob innerhalb des definierten Zeitbereichs kein Zusammenhang zwischen dem zu analysierenden Archiveintrag und Funktionsbausteinen besteht, und dass die Ursachenermittlung dann mittels einer zeitlichen Auswertung oder Analyse des automatisierten Prozesses in einer Zeitspanne vor Auftreten von sich wiederholenden Ereignissen durchgeführt wird.

6. Vorrichtung (V) zur Verbesserung eines Betriebs einer technischen Anlage,
aufweisend zumindest eine Benutzerschnittstelle (BSV) zum Bedienen der Vorrichtung (V),
**dadurch gekennzeichnet, dass** die Vorrichtung derart ausgelegt ist, das Verfahren nach einem der Ansprüche 1 bis 5 durchzuführen.

7. Leitsystem aufweisend ein Projektierungssystem (PS), ein Archiv (A), eine Benutzerschnittstelle (BSL) und eine Vorrichtung (V) zur Durchführung des Verfahrens nach einem der Ansprüche 1 bis 5.

8. Computerprogrammprodukt, das in den Speicher eines Computers geladen wird und Softwarecodeabschnitte umfasst, mit denen ein Verfahren gemäß einem der Ansprüche 1 bis 5 ausgeführt wird, wenn das Produkt auf dem Computer läuft.

## Claims

1. Method for improving an operation of a technical installation,
wherein the technical process (P) running within the installation is controlled and/or monitored by means of a process control system (L) according to the functions specified in a function plan as part of a configuration, and
wherein process-related and control-related data is recorded and written into an archive (A),
**characterised in that**
the archive entries, which are associated with reports, operating actions and switching operations, within a time range to be defined are analysed by a statistical relevance of the archive entries under consideration first being identified,
a cause identification is performed for the statistically most relevant archive entries, using all archive entries which have occurred during the time range under consideration, by evaluating the function plans, and from the causes identified in this manner, proposed solutions for reducing the reports, operating actions and switching operations are derived, in order to improve the operation of the technical installation.

2. Method according to claim 1,
**characterised in that**
the statistical evaluations comprise frequency analyses and frequency trend analyses.

3. Method according to claim 1 and 2,
**characterised in that**
it is examined whether, within the defined time range, the archive entry to be analysed is associated with a function block and this function block is subsequently checked for an incorrect configuration by an evaluation of a combination of the archive entry to be analysed, further archive entries and the configured values of the function block being performed and a proposed solution for rectifying the incorrect configuration being presented to a user on a display apparatus (BSL, BSV).

4. Method according to claim 1 and 2,
**characterised in that**
it is examined whether, within the defined time range, the archive entry to be analysed is associated with a plurality of function blocks, and the logic of said function blocks in relation to one another is checked and is improved by way of subsequent configuration.

5. Method according to claim 1 and 2,
**characterised in that**
it is examined whether, within the defined time range, there is no relation between the archive entry to be analysed and function blocks, and that the cause identification is then performed by means of a temporal evaluation or analysis of the automated process in a timespan before the occurrence of repeating events.

6. Apparatus (V) for improving an operation of a technical installation,
having at least one user interface (BSV) for operating the apparatus (V),
**characterised in that** the apparatus is designed so as to perform the method according to one of claims 1 to 5.

7. Control system having a configuration system (PS), an archive (A), a user interface (BSL) and an apparatus (V) for performing the method according to one of claims 1 to 5.

8. Computer program product, which is loaded into the memory of a computer and comprises software code segments, with which a method according to one of claims 1 to 5 is carried out, when the product runs on the computer.

## Revendications

1. Procédé d'amélioration du fonctionnement d'une installation technique,
dans lequel on commande et/ou contrôle le processus (P) technique se déroulant au sein de l'installation au moyen d'un système (L) de conduite de processus suivant les fonctions fixées dans un plan de fonction dans le cadre d'une planification, et
dans lequel on enregistre des données de technique de processus et de technique de conduite et on les écrit dans une archive (A),
**caractérisé en ce que**
on analyse les entrées d'archive, qui sont en relation avec des messages, des manipulations de service ou des manipulations de commutation dans un laps de temps à définir, en déterminant d'abord une pertinence statistique des entrées d'archive considérées,
on effectue, par une exploitation des plans de fonction, une détermination d'origine, en utilisant toutes les entrées d'archive, qui se sont produites pendant le laps de temps considéré, pour les entrées d'archive les plus pertinentes statistiquement et, à partir des origines ainsi déterminées, on déduit des propositions de solution pour la réduction des messages, des manipulations de service et des manipulations de commutation, afin d'améliorer le fonctionnement de l'installation technique.

2. Procédé suivant la revendication 1,
**caractérisé**
**en ce que** les exploitations statistiques comprennent des analyses de fréquence et des analyses de tendance de fréquence.

3. Procédé suivant la revendication 1 ou 2,
**caractérisé**
**en ce que** l'on recherche si dans le laps de temps défini, l'entrée d'archive à analyser dépend d'un module de fonction et on contrôle, ensuite, la planification défectueuse de ce module de fonction en effectuant une exploitation d'une combinaison de l'entrée d'archive à analyser, d'autres entrées d'archivé et des valeurs planifiées du module de fonction, et on présente, sur un dispositif (BSL, BSV) d'affichage, à un utilisateur, une proposition de solution pour faire cesser la planification défectueuse.

4. Procédé suivant la revendication 1 et 2,
**caractérisé**
**en ce que** l'on recherche si dans le laps de temps défini l'entrée d'archivé à analyser dépend de plusieurs modules de fonction et on contrôle entre elles les logiques de ces modules de fonction et on les améliore par une planification venant ensuite.

5. Procédé suivant la revendication 1 et 2,
**caractérisé**
**en ce que** l'on recherche si dans le laps de temps défini, il n'y a pas de relation entre l'entrée d'archive à analyser et des modules de fonction et **en ce que** l'on effectue la détermination d'origine ensuite au moyen d'une évaluation en fonction du temps ou d'une analyse du processus automatisé dans un laps de temps avant l'apparition d'événements qui se reproduisent.

6. Système (V) pour améliorer le fonctionnement d'une installation technique,
comportant au moins une interface (BSV) d'utilisateur pour le service du système (V),
**caractérisé en ce que** le système est conçu de manière à effectuer le procédé suivant l'une des revendications 1 à 5.

7. Système de conduite comportant un système (PS) de planification, une archive (A), une interface (BSL) d'utilisateur et un système (V) pour effectuer le procédé suivant l'une des revendications 1 à 5.

8. Produit de programme d'ordinateur, qui est chargé dans une mémoire d'un ordinateur et qui comprend des parties de code de logiciel par lesquelles un procédé suivant l'une des revendications 1 à 5 est réalisé lorsque le produit passe sur l'ordinateur.
